# EUROPEAN PATENT SPECIFICATION

(11) **EP 3 187 776 B1**
(45) Date of publication and mention of the grant of the patent: **31.03.2021**
(21) Application number: 16382572.2
(22) Date of filing: 29.11.2016
(51) Int. Cl.: B60Q 1/00, F21S 43/14, F21S 43/235, F21S 43/241, F21S 43/249, F21S 43/31, F21S 43/40, F21S 43/50, F21V 8/00

(54) **LIGHTNING DEVICE FOR A VEHICLE LIGHT**
BELEUCHTUNGSVORRICHTUNG FÜR EINE FAHRZEUGLEUCHTE
DISPOSITIF D'ILLUMINATION D'UN FEU DE VÉHICULE

(30) Priority: 28.12.2015 ES 201531914
(43) Date of publication of application: 05.07.2017
(73) Proprietor: Seat, S.A., 08760 Martorell (ES)
(72) Inventor: París García, Maite, 08760 Martorell (ES); Elvira Ávila, Carlos, 08760 Martorell (ES); Calderón Fernández, Amara, 08760 Martorell (ES)
(74) Representative: Elzaburu S.L.P.

(56) References cited:
- EP-A1- 1 895 228
- EP-A1- 2 835 578
- EP-A2- 2 840 296
- FR-A1- 2 966 223
- FR-A1- 2 966 224
- JP-A- 2012 009 356
- JP-A- 2012 243 734
- JP-A- 2015 162 362
- US-A1- 2012 063 155
- US-B1- 6 739 738

## Description

### PURPOSE OF THE INVENTION

The present patent application relates to a lighting device for a vehicle light according to claim 1.

### BACKGROUND TO THE INVENTION

The present invention relates to day running light (DRL) devices that use LED light. Broadly speaking, there are two main types of device in this category:
- A first type in which the LEDs illuminate a light guide via one of the ends of same, transmitting the light lengthwise. This solution is used to illuminate long outlines or perimetric shapes, either for front lights used as DRL or as rear lights used as side lights.
- A second type used to illuminate a smaller outline in which the aforementioned light guide concept has drawbacks, such as a lack of uniformity around corners or tight angles, where significant amounts of light are lost.

In relation to the second type of DRL devices, the concept of a massive light guide through which light is transmitted is known in the prior art. More specifically, moving from a single LED light emitter to illuminating a substantially rectangular elongate surface using a massive light guide by means of reflection inside same is known from document EP2693105. Specifically, a lighting unit for a vehicle comprising a first unit with a front lighting function and a second light unit with a day running light function is disclosed. The principal feature of the document is that the DRL unit is arranged behind the first unit with a front lighting function such that the light from the DRL unit can pass through a light transmission section to be projected forwards, passing through the first unit with a front lighting function. This provides a compact and small lighting module.

As such, the following main features are known: a DRL comprising a light guide, a light input made up of a surface acting as a collimator and peripheral surfaces that refract the beams of light emitted, multiple light reflections within the light guide against faceted surfaces, and an internal cavity that is used to reflect the incident light in all dimensions.

A light and/or signalling device for a motor vehicle comprising at least one light emitting diode emitting a beam of light, in particular along the axis (X) of said emitter, and at least one optical guide (G), one end of which is illuminated by the at least one of the light emitting diodes is also known in the prior art, and specifically document US20050286262. The optical guide comprises at least one blind orifice produced in the thickness of the optical guide and situated opposite the light emitter, and diverting the beam of light by a lateral reflection of the latter. Said optical guide is able to emit light, in particular along all or part of the length of same.

Accordingly, the following main features are known:
- The optical guide has a solid elongate element, having a cylindrical cross-section and being made of a transparent material, although it may be a different shape.
- An orifice located across the width of the optical guide. This asymmetrically shaped orifice creates flat zones and inclined zones on which the beams of light fall. This is designed to reflect light in different directions.
- A slot for diffusing the light to the opposite face, i.e. towards the output face of the optical guide. This may include a diffusion zone based on micro-diffusion with a potential range of different patterns, such as straight or curved grooves, micro-prisms with a triangular cross section, and specifically shaped holes made in the material in order to improve the uniformity of the light exiting the output face of the optical guide.

Neither prior art document addresses the problem of illuminating the central zone, i.e. the zone behind the orifice that acts as an element for transmitting light in different directions, in the emission direction of the light. The devices described in the two documents lose a lot of uniformity in the light, providing lighting alternatives in which control over reflection of the beams is lost. Thus, in document EP2693105, uniformity is lost, especially in the central output surface (723), as well as using a greater volume of massive light guide, which is a high-cost element. There is an evident loss of control over the beams of light in document US20050286262, as well as an attenuation of the beams of light and the intensity of same in said central zone behind the light transmission orifice.

Another relevant document is the FR2966224, which discloses a device that has a light source and a planar guiding layer with a luminous rays inputting surface. An output section propagates the rays. A collimator is provided with an inputting surface. The collimator is provided with an exit surface that collimates a light beam. The collimator is positioned relative to the guiding layer such that an axis of the collimated light beam is directed along thickness of the guiding layer. The guiding layer has a reflection unit to direct the rays of the collimated beam toward the guiding layer.

As such, there is a clear need to provide a simple day running light function using a minimum number of components while retaining high uniformity and efficiency of the light emitted. Such a device could also be used for functions other than the day running light function that do not require high light intensity, such as rear side lights or rear brake lights.

### DESCRIPTION OF THE INVENTION

The present invention relates to day running light (DRL) devices in which the light source is a light emitting diode (LED). The fundamental elements of the present invention are a massive light guide made of solid material used to transmit light uniformly, a mask used to select the controlled light outputs from the guide, a first reflection surface acting as a collimator for the light flow, a second reflection surface that preferably includes a series of faceted optics designed to direct the stream towards the light outputs or towards the third reflection surfaces, and a possible third reflection surface designed to direct the beams of light towards the surfaces to be illuminated.

Accordingly, and in greater detail, the lighting device comprises at least one light source, at least one light guide that comprises at least one surface to be illuminated and at least one first reflection member arranged to face the at least one light source such that the at least one beam of light emitted by the at least one light source falls on the at least one first reflection member, in which the at least one light guide has at least one third reflection surface and at least one second reflection surface that in turn has at least two regions, in which the at least one third reflection surface and the at least two regions surround the at least one first reflection member, the at least one first reflection member includes at least three reflection faces arranged in a pyramidal shape such that the incident light falling on the at least one reflection member is dispersed substantially in at least three different directions, in which a first reflection face is designed to reflect inside the light guide the light emitted by the at least one light source towards the at least one third reflection surface, in which a second reflection face and a third reflection face are designed to reflect inside the light guide the light emitted by the at least one light source towards the at least one second reflection surface, the at least one second reflection surface is designed to reflect inside the light guide the incident light towards the at least one third reflection surface, the at least one third reflection surface is designed to reflect inside the light guide the incident light towards the at least one surface to be illuminated, wherein the lighting device includes at least three light sources and at least three surfaces to be illuminated, in which the at least one light guide includes at least three first reflection members each including at least three reflection faces arranged in a pyramidal shape, at least three second reflection surfaces and at least three third reflection surfaces that direct the light towards the at least three surfaces to be illuminated, in which the at least three surfaces to be illuminated form a polygon having at least three sides, and the at least one light guide is a single light guide common to the at least three light sources and connected to the at least three light sources.

A massive light guide has the advantage of internally transmitting the light uniformly through all of the dimensions of same, which helps to achieve high internal uniformity, thereby eliminating points of light that are reflections of the emission from an LED, correctly distributing the light over the entire surface. Furthermore, it is a solid member, all of which is illuminated. Accordingly, the objective of the present idea is to direct the beams of light through the inside of the light guide such that same are channelled as uniformly as possible towards the at least one surface to be illuminated, enabling users to observe the at least one illuminated surface with the same light intensity and light tone.

Furthermore, a noteworthy feature is that all of the light emitted by the at least one light emitter is reflected in the first reflection member of the massive light guide. This feature is advantageous since it provides enhanced control over the beams of light, enabling the beams of incident light to be precisely directed towards other dimensions. More specifically, all of the beams of light emitted are reflected against the at least three reflection faces arranged in a pyramidal shape, thereby preventing the beams of light travelling through the light guide randomly.

The idea that "all of the light is reflected against a first reflection surface of the massive light guide" is intended to explain the concept that all of the controllable beams of light emitted by the light emitter fall directly on the first reflection member. The expression "in the light guide" means that the beams of light are reflected inside the light guide. Furthermore, "a pyramidal shape" means a shape of a geometric body that has three faces that are joined in pairs at the edges, with all three faces being joined at a single apex.

Advantageously, the at least two regions of the at least one second reflection surface include a plurality of faceted optics designed to reflect the incident light, such that the light falling on the at least one second reflection surface is reflected in substantially the same direction towards the third reflection surface. A reflection surface comprising a plurality of faceted optics enables some of the beams of the incident light oriented in a first direction to be reflected and directed in a controlled manner in a second direction. This ensures that the beams of incident light are substantially aligned in a single direction.

According to another aspect of the invention, the lighting device includes at least one cover overlapping the at least one light guide, in which the at least one cover defines the at least one surface to be illuminated, such as to enable light to exit the at least one light guide. A massive light guide is a body that transfers light while minimising losses. If the outer surface of the light guide is not treated in any way, the whole of this body is illuminated. Using the cover ensures that only the surfaces that are intended to be illuminated are illuminated, while simultaneously covering any leaks of light that would distort the uniform visual effect of the light emitted by the at least one surface to be illuminated.

In a preferred embodiment of the invention, the cover is black in order to most efficiently absorb any leaks of light, thereby preventing light from passing through the cover. Advantageously, the lighting device includes a centring element for the light guide, to ensure that the light guide is perfectly oriented and positioned in relation to the at least one light emitter and the cover. Furthermore, this minimises the effects of vibrations and jolts caused by the movement of the vehicle.

According to the invention, the lighting device includes at least three light sources and at least three surfaces to be illuminated, in which the at least one light guide includes at least three first reflection members each including at least three reflection faces arranged in a pyramidal shape, at least three second reflection surfaces and at least three third reflection surfaces that direct the light towards the at least three surfaces to be illuminated, in which the at least three surfaces to be illuminated form a polygon having at least three sides. This provides the day running light with a closed outline shape, making it appear more compact and aesthetically pleasing.

According to the invention, the lighting device includes a single light guide common to the at least three light sources and connected to the at least three light sources. This makes the design more robust and compact, while reducing the number of components required and the volume of material used to make the light guide. Furthermore, all internal reflections of the light emitted by the at least three light emitters occur in full in a single light guide.

More specifically, the at least one beam of light emitted by one of the at least three light sources falls on the first reflection member oriented to face the light source and on the second and third reflection surfaces that surround the first reflection member such that one of the at least three light sources illuminates one of the at least three surfaces to be illuminated. Accordingly, each light source is associated with its own first reflection member, its own second reflection surface, and its own third reflection surface, making the light flow sharper and more uniform and preventing beams of light from crossing, by giving each reflection surface a specific function

According to another aspect of the invention, the lighting device includes electronics and a heat sink common to the at least three light sources and connected to the at least three light sources. Using a single light guide makes it possible to use common electronics and a single heat sink for the at least three light sources. This makes it possible to arrange the three light emitters close to one another in a central zone of the light guide. This helps to reduce the number of components required and provides a more robust and more compact design.

More specifically, the at least one second reflection face is designed to reflect the incident light towards a first of the at least two regions and the at least one third reflection face is designed to reflect the incident light towards a second of the at least two regions, in which the first and second of the at least two regions are part of a single second reflection surface. Accordingly, each second reflection surface comprises two regions, which in turn comprise the plurality of faceted optics. Furthermore, the two regions partially surround the respective first reflection member.

Advantageously, the light reflected by at least one second reflection face and by at least one third reflection face is oriented in the same direction, the at least one second reflection face and the at least one third reflection face being part of a single first reflection member. As such, the beams of light reflected by the second reflection face and by the third reflection phase are aligned substantially in the same direction towards the second reflection surface. Accordingly, including the plurality of reflection faces in a single reflection member prevents the beams of light from becoming misaligned or crossing, which could happen if separate components are used.

Additionally, the light reflected by at least one second reflection face and by at least one third reflection face is oriented in the opposite direction, the at least one second reflection face and the at least one third reflection face being part of a single first reflection member. Subsequently, the light falling on the second reflection face is reflected towards one of the regions of the second reflection surface and the light falling on the third reflection face is reflected towards the other of the regions of the second reflection surface. The primary function of the second and third reflection faces combined with the two regions of the second reflection surface is to direct beams of light towards the most distant points of the surface to be illuminated in a uniform and controlled manner. Accordingly, the second and third reflection faces are intended to open the field of the beams of light emitted by the light emitter such as to illuminate a longer surface to be illuminated.

Moreover, the light falling on at least one of the first reflection faces is reflected in a direction substantially perpendicular to the light reflected by at least one of the second or third reflection faces, at least one of the first reflection faces and at least one of the second or third reflection faces being part of a single first reflection member. Again, the substantially perpendicular direction of the first reflection face in relation to the second and third reflection faces helps to further open the field formed by the beams of light emitted by the light emitter. Moreover, including the plurality of reflection faces in a single reflection member obviates potential misalignments, which could occur if separate components are used.

According to another aspect of the invention, the light guide is made of high-transmissivity optical polycarbonate, which is a lightweight material with high impact strength. This minimises the risk of breakage and provides high transmissivity of light inside the light guide, minimising the losses inside same.

The present invention also relates to a vehicle light that includes a lighting device as described above, thereby benefiting from the advantages described above.

The lighting device according to the present invention makes it possible to illuminate some outer surfaces of the light guide using a set of reflections. This provides a surface that is uniformly illuminated both in the central zone of same, i.e. the zone behind the first reflection member in the light emission direction, and in the lateral zones besides said central zone. Furthermore, the number of components used, the overall volume of the lighting device and the complexity of the assembly of same are all minimised.

The attached drawings show, by way of a nonlimiting example, a lighting device for a vehicle light according to the invention. Other features and advantages of said lighting device for a vehicle light to which the present invention relates, are set out in the description of a preferred, but non-exclusive, embodiment, which is illustrated by way of a nonlimiting example in the attached drawings. The invention is limited only by the appended claims.

### SHORT DESCRIPTION OF THE FIGURES

Figure 1 is an exploded perspective view of the light guide and the light source of the lighting device for a vehicle light according to the present invention.
Figure 2 is an exploded perspective view of the guide, the light source, the cover and the centring element of the lighting device for a vehicle light according to the present invention.
Figure 3A is a detailed perspective view of the light guide of the lighting device for a vehicle light according to the present invention.
Figure 3B is a detailed front view of the cover and the light guide of the lighting device for a vehicle light according to the present invention.
Figure 4 is a front view of a vehicle light according to the present invention.
Figure 5A is a detailed front view of the light guide of the lighting device for a vehicle light according to the present invention.
Figure 5B is a detailed front view of the light guide of the lighting device for a vehicle light according to the present invention.
Figure 6A is a detailed front view of the light guide of the lighting device for a vehicle light according to the present invention.
Figure 6B is a cross section of the lighting device for a vehicle light according to the present invention, taken along the line B-B.
Figure 6C is a cross section of the lighting device for a vehicle light according to the present invention, taken along the line C-C.

### DESCRIPTION OF A PREFERRED EMBODIMENT

In consideration of the numbering adopted, the aforementioned figures show an example preferred embodiment of the invention that includes the parts and elements mentioned and described in detail below.

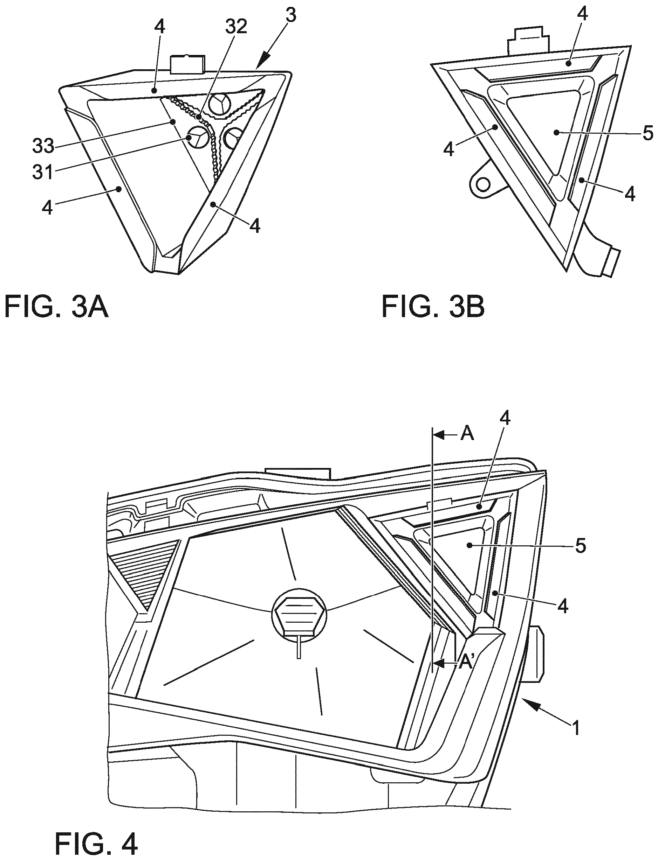

The present invention relates to a lighting device for a vehicle light 1 that is intended to illuminate a small outline, and more specifically a geometric shape in which the outline of same is illuminated. An example of this is the generation of three illuminated surfaces that form an outline of a triangle, as shown in Figure 4. This type of lighting is used both in front lights for day running light (DRL) functions and for rear lights performing brake- or side-lighting functions.

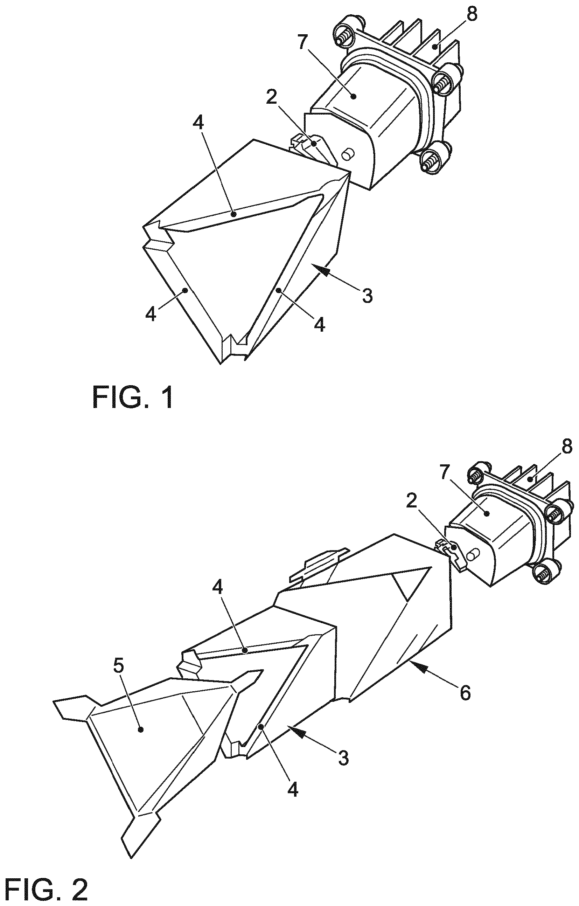

Accordingly and as shown in Figure 2, the main components of the present lighting device for a light 1 are, moving from the innermost zone to the outermost zone in the direction of the light emitted by a light source 2:
- a heat sink 8 used to dissipate the heat generated by the light source 2 and electronics related to said light source 2,
- electronics 7 intended to control operation of the light source 2,
- at least one light source 2, which is an LED light source in consideration of the type of lighting required,
- a centring device 6 that is intended to correctly position the light guide 3 in relation to the light sources 2,
- a light guide 3 that is intended to transmit and disperse the light emitted by the at least one light source 2 in order to uniformly illuminate some of the surfaces 4 to be illuminated,
- a cover 5 that ensures that light only exits the lighting device for a light 1 through the intended zones, obviating leaks of light that would result in an unwanted visual effect.

Accordingly, and as shown in Figures 1, 2, 3A, 3B, 5A, 5B and 6C, the lighting device for a vehicle light 1 comprises at least one light source 2, at least one light guide 3 that comprises at least one surface 4 to be illuminated and at least one first reflection member 31 arranged to face the at least one light source 2 such that the at least one beam of light emitted by the at least one light source 2 falls on the at least one first reflection member 31, in which the at least one light guide 3 has at least one third reflection surface 33 and at least one second reflection surface 32 that in turn has at least two regions 321, in which the at least one third reflection surface 33 and the at least two regions 321 surround the at least one first reflection member 31, the at least one first reflection member 31 includes at least three reflection faces arranged in a pyramidal shape such that the incident light falling on the at least one reflection member 31 is dispersed substantially in at least three different directions, in which a first reflection face 311a is designed to reflect inside the light guide 3 the light emitted by the at least one light source 2 towards the at least one third reflection surface 33, in which a second reflection face 311b and a third reflection face 311c are designed to reflect inside the light guide 3 the light emitted by the at least one light source 2 towards the at least one second reflection surface 32, the at least one second reflection surface 32 is designed to reflect inside the light guide 3 the incident light towards the at least one third reflection surface 33, the at least one third reflection surface 33 is designed to reflect inside the light guide 3 the incident light towards the at least one surface 4 to be illuminated.

All of the controllable beams of light emitted by the light emitter fall directly on the first reflection member 31, such that the dimensions of the first reflection member 31 are adequate to ensure that all of the controllable beams of light emitted by the light source 2 fall on said member. Forcing a first reflection of the beams of light against the first reflection member 31 makes it possible to control the directions in which the beams of light are dispersed, thereby achieving uniform illumination of the surface 4 to be illuminated.

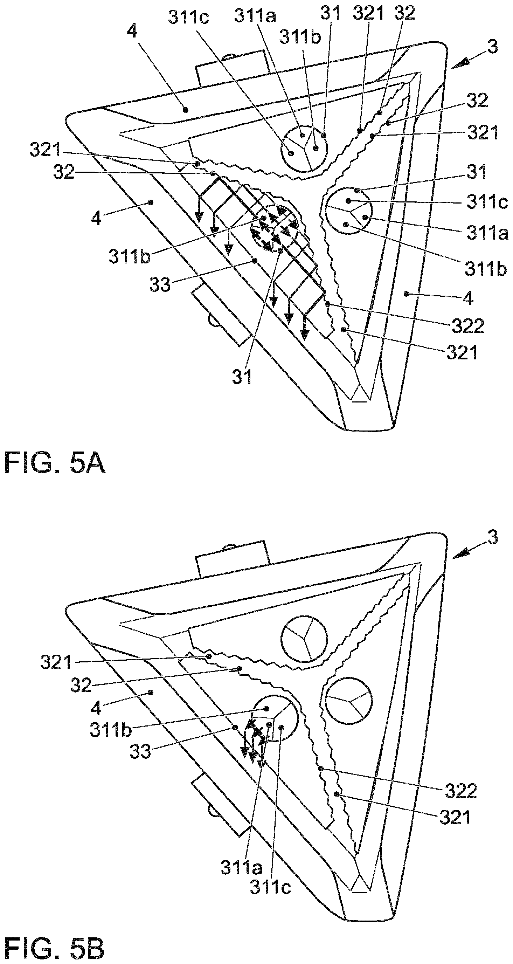

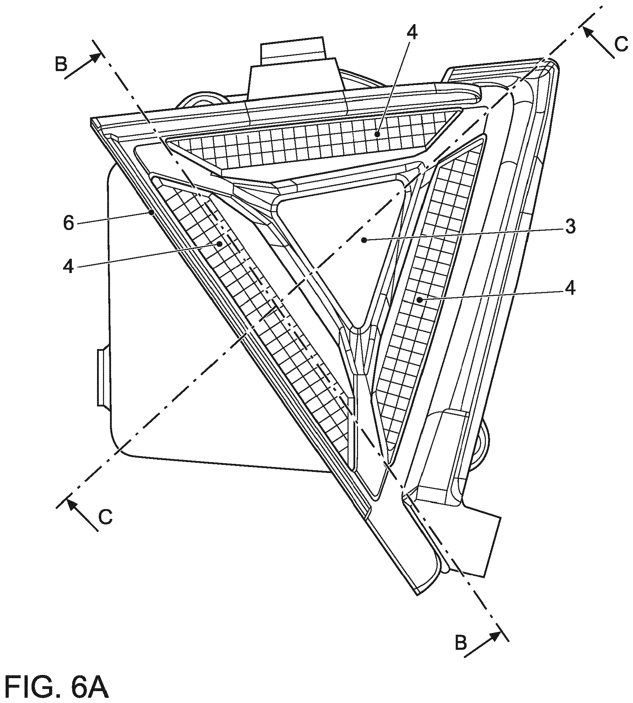

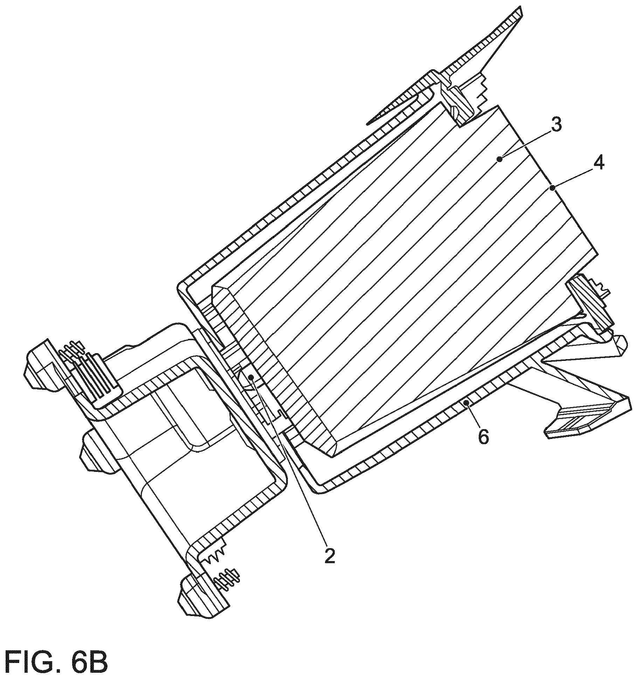

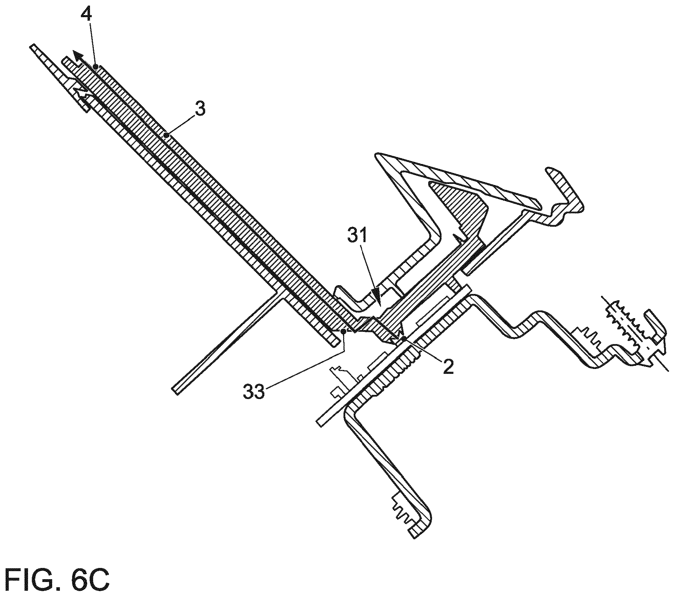

It should also be noted that the light emitted by the LED is cone shaped, and that these are the beams of light that are injected into the massive light guide 3. As shown in the cross section in Figure 6C and in the front view in Figure 5A, all of the cone-shaped beams of light emitted by each of the LEDs fall directly on a first reflection member 31 or surface. In an alternative embodiment, an intermediate optic or lens may be used to direct said beams of light more specifically. This first reflection member 31 or surface is preferably pyramid shaped, with three surfaces intersecting at a single apex and with a substantially circumference-shaped base. Each of the faces reflects some of the beams of light emitted by the LEDs in a different direction.

This first pyramidal surface enables the beams of light to be dispersed in substantially three different directions. The beams of light reflected against the two larger surfaces 311b, 311c subsequently fall on a second reflection surface 32 having a surface with faceted optics 322. This second reflection enables the beams of light to be emitted in directions substantially parallel to one another. Once all of the beams of light have been oriented in the same direction, there is a third reflection provided by a third reflection surface 33 intended to direct same towards the surface 4 to be illuminated.

In greater detail and as shown in Figures 5A and 5B, the at least two regions 321 of the at least one second reflection surface 32 include a plurality of faceted optics 322 designed to reflect the incident light, such that the light falling on the at least one second reflection surface 32 is reflected in substantially the same direction towards the third reflection surface 33.

Furthermore and as shown in Figures 2, 3B and 4, the lighting device includes at least one cover 5 overlapping the at least one light guide 3, in which the at least one cover 5 defines the at least one surface 4 to be illuminated, such as to enable light to exit the at least one light guide 3. In an alternative embodiment, the cover 5 enables light to pass through partially on account of the specific shape of same or because the cover 5 includes at least one slot 51 overlapping the at least one surface 4 to be illuminated, enabling light to pass through said slot 51.

As shown in Figures 2, 3B and 4, the cover 5 is black, absorbing the incident light and preventing light from leaking into unwanted zones.

Additionally and as shown in Figure 2, the lighting device includes a centring element 6 for the light guide 3 that enables the light sources 2 to be correctly positioned and oriented to face the respective first reflection members 31, thereby ensuring that all of the beams of light emitted by each light source 2 fall on the respective first reflection member 31.

According to the invention, as shown in Figures 3A, 5A and 5B, the lighting device includes at least three light sources 2 and at least three surfaces 4 to be illuminated, in which the at least one light guide 3 includes at least three first reflection members 3 each including at least three reflection faces 311a,311b,311c arranged in a pyramidal shape, at least three second reflection surfaces 32 and at least three third reflection surfaces 33 that direct the light towards the at least three surfaces 4 to be illuminated, in which the at least three surfaces 4 to be illuminated form a polygon having at least three sides. According to the embodiment shown in Figure 3B, the lighting device for a light 1 includes three light sources 2, such that each light source 2 emits light to the respective first reflection member 31, the respective second reflection surface 32 and the respective third reflection surface 33 of same, thereby illuminating the respective surface 4 to be illuminated. Notably, this creates a triangle formed of three perimetric surfaces 4 to be illuminated.

More specifically and as shown in Figures 1, 2 and 6A, the lighting device includes a single light guide 3 common to the at least three light sources 2 and connected to the at least three light sources 2. Thus, the beams of light emitted by a light source 2 do not interfere with the beams of light emitted by another light source 2 inside the light guide 3. More specifically and as shown in Figures 5A and 5B, the light guide is designed to form at least three different zones in order to generate separate light transmissions in each of the three parts. The component that divides the beams of light is the second reflection surface 32, in which the two regions 321 that make up each second reflection surface 32 delimit each of the parts. More specifically and as shown in Figures 5A and 5B, the at least one beam of light emitted by one of the at least three light sources 2 falls on the first reflection member 31 oriented to face the light source 2 and on the second and third reflection surfaces 32, 33 that surround the first reflection member 31 such that one of the at least three light sources 2 illuminates one of the at least three surfaces 4 to be illuminated.

According to another aspect of the invention, and as shown in Figure 2, the lighting device includes electronics 7 and a heat sink 8 common to the at least three light sources 2 and connected to the at least three light sources 2.

Moreover and as shown in Figures 5A and 5B, the at least one second reflection face 311b is designed to reflect the incident light towards a first of the at least two regions 321 and the at least one third reflection face 311c is designed to reflect the incident light towards a second of the at least two regions 321, in which the first and second of the at least two regions 321 are part of a single second reflection surface 32.

It should be noted that, as shown in Figure 5A, the light reflected by at least one second reflection face 311b and by at least one third reflection face 311c is oriented in the same direction after reflection on the second reflection surface (32), the at least one second reflection face 311b and the at least one third reflection face 311c being part of a single first reflection member 31.

Furthermore and as shown in Figure 5A, the light reflected by at least one second reflection face 311b and by at least one third reflection face 311c is oriented in the opposite direction, the at least one second reflection face 311b and the at least one third reflection face 311c being part of a single first reflection member 31.

According to another aspect of the invention, as shown in Figures 5A and 5B, the light reflected by at least one of the first reflection faces 311a is oriented in a direction substantially perpendicular to the light reflected by at least one of the second or third reflection faces 311b, 311c, in which at least one of the first reflection faces 311a and at least one of the second or third reflection faces 311b, 311c are part of a single first reflection member 31.

Figure 5B shows, schematically and in greater detail, a first path followed by the beams of light inside the light guide 3 ending at a surface 4 to be illuminated. Accordingly, some of the beams of light emitted by a light source 2 fall on a first reflection face 311a of the first reflection member 31. These beams of light are reflected towards the third reflection surface 33. There is subsequently a third reflection on the third reflection surface 33 that directs the beams of light towards the surface 4 to be illuminated. As shown, this first path followed by the beams of light illuminates a central surface of the surface 4 to be illuminated.

Furthermore, Figure 5A shows, schematically, a second path followed by the beams of light inside the light guide 3 ending at a surface 4 to be illuminated. More specifically, some of the beams of light emitted by a light source 2 fall on a second reflection face 311b of the first reflection member 31. These beams of light are reflected towards a region 321 of the second reflection surface 32. The faceted optics of the second reflection surface 32 reflect said beams of light substantially parallel to one another towards the third reflection surface 33. Finally, the beams of light are again reflected against the third reflection surface 33, which directs the beams of light towards the surface 4 to be illuminated. The reflection against the second reflection face 311b opens the field of the beams of the incident light such that this second path followed illuminates a lateral surface of the surface 4 to be illuminated.

Finally, Figure 5A shows, schematically, a third path followed by the beams of light inside the light guide 3 ending at a surface 4 to be illuminated. More specifically, some of the beams of light emitted by a light source 2 fall on a third reflection face 311c of the first reflection member 31. These beams of light are reflected towards another region 321 of the second reflection surface 32. The faceted optics of the second reflection surface 32 reflect said beams of light substantially parallel to one another towards the third reflection surface 33. Finally, the beams of light are again reflected against the third reflection surface 33, which directs the beams of light towards the surface 4 to be illuminated. Reflection against the third reflection face 311c opens the field of the beams of the incident light on a path different to the beams reflected against the second reflection face 311b, such that this third path followed illuminates the other lateral surface of the surface 4 to be illuminated.

Advantageously and in order to enhance the transmissivity of the light inside the light guide 3, the light guide 3 is made of high-transmissivity optical polycarbonate.

As shown in Figure 4, the present invention also relates to a vehicle light that includes a lighting device as described above. Specifically, Figure 3 shows a front light in which the day running lights device includes three straight surfaces 4 to be illuminated. Additionally, the lighting device for a vehicle light 1 makes it possible to generate different shapes, essentially illuminating the perimeters of polygonal surfaces by extrapolating the concept set out and associating each surface 4 to be illuminated with one side of said polygonal surface.

The details, forms, dimensions and other additional elements, as well as the components used to implement the lighting device for a vehicle light may be replaced using other such appropriate elements that are technically equivalent, without thereby departing essentially from the invention or the scope defined by the claims included after the list below.

### List of reference signs:

- 1: light
- 2: light source
- 3: light guide
- 31: first reflection member
- 311a: first reflection face
- 311b: second reflection face
- 311c: third reflection face
- 32: second reflection surface
- 321: region
- 322: faceted optic
- 33: third reflection surface
- 4: surface to be illuminated
- 5: cover
- 6: centring element
- 7: electronics
- 8: heat sink

## Claims

1. Lighting device for a vehicle light (1) in which the lighting device comprises:
- at least one light source (2),
- at least one light guide (3) that comprises at least one surface to be illuminated (4) and at least one first reflection member (31) arranged to face the at least one light source (2) such that the at least one beam of light emitted by the at least one light source (2) falls on the at least one first reflection member (31),
- the at least one light guide (3) has at least one third reflection surface (33) and at least one second reflection surface (32) that in turn has at least two regions (321), in which the at least one third reflection surface (33) and the at least two regions (321) surround the at least one first reflection member (31),
- the at least one first reflection member (31) includes at least three reflection faces arranged in a pyramidal shape such that the incident light falling on the at least one reflection member (31) is dispersed substantially in at least three different directions,
o in which a first reflection face (311a) is designed to reflect, inside the light guide (3), the light emitted by the at least one light source (2) towards the at least one third reflection surface (33),
o in which a second reflection face (311b) and a third reflection face (311c) are designed to reflect, inside the light guide (3), the light emitted by the at least one light source (2) towards the at least one second reflection surface (32),
- the at least one second reflection surface (32) is designed to reflect, inside the light guide (3), the incident light towards the at least one third reflection surface (33),
- the at least one third reflection surface (33) is designed to reflect, inside the light guide (3), the incident light towards the at least one surface (4) to be illuminated, **characterised in that** it includes
- at least three light sources (2) and at least three surfaces (4) to be illuminated, in which the at least one light guide (3) includes at least three first reflection members (31) each including at least three reflection faces arranged in a pyramidal shape, at least three second reflection surfaces (32) and at least three third reflection surfaces (33) that direct the light towards the at least three surfaces (4) to be illuminated, in which the at least three surfaces (4) to be illuminated form a polygon having at least three sides,
- and the at least one light guide (3) is a single light guide common to the at least three light sources (2) and connected to the at least three light sources (2).

2. Lighting device for a vehicle light (1) according to Claim 1, **characterized in that** the at least two regions (321) of the at least one second reflection surface (32) include a plurality of faceted optics (322) designed to reflect the incident light, such that the light falling on the at least one second reflection surface (32) is reflected in substantially the same direction towards the third reflection surface (33).

3. Lighting device for a vehicle light (1) according to Claim 1, **characterized in that** it includes at least one cover (5) overlapping the at least one light guide (3), in which the at least one cover (5) defines the at least one surface (4) to be illuminated, such as to enable light to exit the at least one light guide (3).

4. Lighting device for a vehicle light (1) according to Claim 3, **characterized in that** the cover (5) is black.

5. Lighting device for a vehicle light (1) according to Claim 1, **characterized in that** it includes a centring element (6) for the light guide (3).

6. Lighting device for a vehicle light (1) according to Claim 1, **characterized in that** the at least one beam of light emitted by one of the at least three light sources (2) falls on the first reflection member (31) oriented to face the light source (2) and on the second and third reflection surfaces (32, 33) that surround the first reflection member (31) such that one of the at least three light sources (2) illuminates one of the at least three surfaces (4) to be illuminated.

7. Lighting device for a vehicle light (1) according to Claim 1, **characterized in that** it includes electronics (7) and a heat sink (8) common to the at least three light sources (2) and connected to the at least three light sources (2).

8. Lighting device for a vehicle light (1) according to Claim 1, **characterized in that** the at least one second reflection face (311b) is designed to reflect the incident light towards a first of the at least two regions (321) and **in that** the at least one third reflection face (311c) is designed to reflect the incident light towards a second of the at least two regions (321), in which the first and second of the at least two regions (321) are part of a single second reflection surface (32).

9. Lighting device for a vehicle light (1) according to Claim 1, **characterized in that** the light reflected by at least one second reflection face (311b) and by at least one third reflection face (311c) is oriented, after reflection on the second reflection surface (32), in the same direction, in which the at least one second reflection face (311b) and the at least one third reflection face (311c) are part of a single first reflection member (31).

10. Lighting device for a vehicle light (1) according to Claim 9, **characterized in that** the light reflected by at least one second reflection face (311b) and by at least one third reflection face (311c) is oriented in the opposite direction, in which the at least one second reflection face (311b) and the at least one third reflection face (311c) are part of a single first reflection member (31).

11. Lighting device for a vehicle light (1) according to Claim 1, **characterized in that** the light reflected by at least one of the first reflection faces (311a) is oriented in a direction substantially perpendicular to the light reflected by at least one of the second or third reflection faces (311b, 311c), in which at least one of the first reflection faces (311a) and at least one of the second or third reflection faces (311b, 311c) are part of a single first reflection member (31).

12. Lighting device for a vehicle light (1) according to Claim 1, **characterized in that** the light guide (3) is made of high-transmissivity optical polycarbonate.

13. Vehicle light (1) incorporating a lighting device according to Claim 1.

## Patentansprüche

1. Beleuchtungsgerät für eine Fahrzeugleuchte (1), wobei das Beleuchtungsgerät Folgendes umfasst:
- mindestens eine Lichtquelle (2),
- mindestens einen Lichtleiter (3), der mindestens eine zu beleuchtende Fläche (4) und mindestens ein erstes Reflexionselement (31) umfasst, das der mindestens einen Lichtquelle (2) zugewandt ist, sodass der mindestens eine von der mindestens einen Lichtquelle (2) emittierte Lichtstrahl auf das mindestens eine erste Reflexionselement (31) fällt,
- wobei der mindestens eine Lichtleiter (3) mindestens eine dritte Reflexionsfläche (33) und mindestens eine zweite Reflexionsfläche (32) umfasst, die ihrerseits mindestens zwei Regionen (321) umfassen, wobei die mindestens eine dritte Reflexionsfläche (33) und die mindestens zwei Regionen (321) das mindestens eine erste Reflexionselement (31) umgeben,
- wobei das mindestens eine erste Reflexionselement (31) mindestens drei Reflexionsflächen umfasst, die pyramidenförmig angeordnet sind, sodass das auf das mindestens eine Reflexionselement (31) auftreffende Licht im Wesentlichen in mindestens drei unterschiedliche Richtungen gestreut wird,
o wobei die erste Reflexionsfläche (311a) das von der mindestens einen Lichtquelle (2) emittierte Licht im Inneren des Lichtleiters (3) in Richtung der mindestens einen dritten Reflexionsfläche (33) reflektiert,
o wobei die zweite Reflexionsfläche (311b) und die dritte Reflexionsfläche (311c) das von der mindestens einen Lichtquelle (2) emittierte Licht im Inneren des Lichtleiters (3) in Richtung der mindestens einen zweiten Reflexionsfläche (32) reflektieren,
- wobei die mindestens eine zweite Reflexionsfläche (32) das einfallende Licht innerhalb des Lichtleiters (3) in Richtung der mindestens einen dritten Reflexionsfläche (33) reflektiert,
- wobei die mindestens eine dritte Reflexionsfläche (33) das einfallende Licht innerhalb des Lichtleiters (3) in Richtung der mindestens einen zu beleuchtenden Fläche (4) reflektiert,
und das sich dadurch auszeichnet,
dass es Folgendes umfasst:
- mindestens drei Lichtquellen (2) und mindestens drei zu beleuchtende Flächen (4), wobei der mindestens eine Lichtleiter (3) mindestens drei erste Reflexionselemente (31) mit jeweils mindestens drei pyramidenförmig angeordneten Reflexionsflächen, mindestens drei zweite Reflexionsflächen (32) und mindestens drei dritte Reflexionsflächen (33) umfasst, die das Licht auf die mindestens drei zu beleuchtenden Flächen (4) lenken, wobei die mindestens drei zu beleuchtenden Flächen (4) ein Polygon mit mindestens drei Seiten bilden,
- und wobei es sich beim mindestens einen Lichtleiter (3) um einen einzelnen gemeinsamen Lichtleiter für die mindestens drei Lichtquellen (2) handelt, der mit den mindestens drei Lichtquellen (2) verbunden ist.

2. Beleuchtungsgerät für eine Fahrzeugleuchte (1) gemäß Anspruch 1, das sich dadurch auszeichnet, dass die mindestens zwei Regionen (321) der mindestens einen zweiten Reflexionsfläche (32) mehrere facettierte Optiken (322) umfassen, die das einfallende Licht reflektieren, sodass das auf die mindestens eine zweite Reflexionsfläche (32) auftreffende Licht im Wesentlichen in die gleiche Richtung und somit zur dritten Reflexionsfläche (33) reflektiert wird.

3. Beleuchtungsgerät für eine Fahrzeugleuchte (1) gemäß Anspruch 1, die mindestens eine Abdeckung (5) aufweist, die den mindestens einen Lichtleiter (3) abdeckt, wobei die mindestens eine Abdeckung (5) die mindestens eine zu beleuchtende Fläche (4) so definiert, dass Licht aus dem mindestens einen Lichtleiter (3) austreten kann.

4. Beleuchtungsgerät für eine Fahrzeugleuchte (1) gemäß Anspruch 3, wobei die Abdeckung (5) schwarz ist.

5. Beleuchtungsgerät für eine Fahrzeugleuchte (1) gemäß Anspruch 1, die ein Zentrierelement (6) für den Lichtleiter (3) umfasst.

6. Beleuchtungsgerät für eine Fahrzeugleuchte (1) gemäß Anspruch 1, wobei der mindestens eine von einer der mindestens drei Lichtquellen (2) emittierte Lichtstrahl auf das der Lichtquelle (2) zugewandte erste Reflexionselement (31) und auf die das erste Reflexionselement (31) umgebende zweite und dritte Reflexionsfläche (32, 33) fällt, sodass eine der mindestens drei Lichtquellen (2) eine der mindestens drei zu beleuchtenden Flächen (4) beleuchtet.

7. Beleuchtungsgerät für eine Fahrzeugleuchte (1) gemäß Anspruch 1, das eine Elektronik (7) und einen Kühlkörper (8) für die mindestens drei Lichtquellen (2) umfasst, die mit den mindestens drei Lichtquellen (2) verbunden sind.

8. Beleuchtungsgerät für eine Fahrzeugleuchte (1) gemäß Anspruch 1, wobei die mindestens eine zweite Reflexionsfläche (311b) das einfallende Licht in Richtung einer ersten der mindestens zwei Regionen (321) reflektiert, und wobei die mindestens eine dritte Reflexionsfläche (311c) das einfallende Licht in Richtung einer zweiten der mindestens zwei Regionen (321) reflektiert, wobei die erste und zweite der mindestens zwei Regionen (321) Teil einer einzigen zweiten Reflexionsfläche (32) sind.

9. Beleuchtungsgerät für eine Fahrzeugleuchte (1) gemäß Anspruch 1, wobei das von mindestens einer zweiten Reflexionsfläche (311b) und von mindestens einer dritten Reflexionsfläche (311c) reflektierte Licht im Anschluss an das Reflektieren auf der zweiten Reflexionsfläche (32) in die gleiche Richtung ausgerichtet ist, wobei die mindestens eine zweite Reflexionsfläche (311b) und die mindestens eine dritte Reflexionsfläche (311c) Teil eines einzigen ersten Reflexionselements (31) sind.

10. Beleuchtungsgerät für eine Fahrzeugleuchte (1) gemäß Anspruch 9, wobei das von mindestens einer zweiten Reflexionsfläche (311b) und von mindestens einer dritten Reflexionsfläche (311c) reflektierte Licht in die entgegengesetzte Richtung ausgerichtet ist, wobei die mindestens eine zweite Reflexionsfläche (311b) und die mindestens eine dritte Reflexionsfläche (311c) Teil eines einzigen ersten Reflexionselements (31) sind.

11. Beleuchtungsgerät für eine Fahrzeugleuchte (1) gemäß Anspruch 1, wobei das von mindestens einer der ersten Reflexionsflächen (311a) reflektierte Licht in einer Richtung ausgerichtet ist, die im Wesentlichen senkrecht zum von mindestens einer der zweiten oder dritten Reflexionsflächen (311b, 311c) reflektierten Licht verläuft, wobei mindestens eine der ersten Reflexionsflächen (311a) und mindestens eine der zweiten oder dritten Reflexionsflächen (311b, 311c) Teil eines einzigen ersten Reflexionselements (31) sind.

12. Beleuchtungsgerät für eine Fahrzeugleuchte (1) gemäß Anspruch 1, wobei der Lichtleiter (3) aus einem optischen Polykarbonat mit hoher Transmissivität besteht.

13. Fahrzeugleuchte (1) mit einem Beleuchtungsgerät gemäß Anspruch 1.

## Revendications

1. Dispositif d'éclairage pour un feu de véhicule (1), ledit dispositif d'éclairage comprenant :
- au moins une source lumineuse (2),
- au moins un guide de lumière (3), lequel comprend au moins une surface (4) à éclairer et au moins un premier élément de réflexion (31) agencé pour faire face à l'au moins une source lumineuse (2) de telle sorte que l'au moins un faisceau lumineux émis par l'au moins une source lumineuse (2) tombe sur l'au moins un premier élément de réflexion (31),
- l'au moins un guide de lumière (3) comporte au moins une troisième surface de réflexion (33) et au moins une deuxième surface de réflexion (32), laquelle comporte au moins deux zones (321), l'au moins une troisième surface de réflexion (33) et les au moins deux zones (321) entourant l'au moins un premier élément de réflexion (31),
- l'au moins un premier élément de réflexion (31) comprend au moins trois faces de réflexion agencées selon une forme pyramidale de telle sorte que la lumière incidente tombant sur l'au moins un élément de réflexion (31) est dispersée sensiblement dans au moins trois directions différentes,
∘ une première face de réflexion (311a) étant conçue pour réfléchir, à l'intérieur du guide de lumière (3), la lumière émise par l'au moins une source lumineuse (2) vers l'au moins une troisième surface de réflexion (33),
∘ une deuxième face de réflexion (311b) et une troisième face de réflexion (311c) étant conçues pour réfléchir, à l'intérieur du guide de lumière (3), la lumière émise par l'au moins une source lumineuse (2) vers l'au moins une deuxième surface de réflexion (32),
- l'au moins une deuxième surface de réflexion (32) est conçue pour réfléchir, à l'intérieur du guide de lumière (3), la lumière incidente vers l'au moins une troisième surface de réflexion (33),
- l'au moins une troisième surface de réflexion (33) est conçue pour réfléchir, à l'intérieur du guide de lumière (3), la lumière incidente vers l'au moins une surface (4) à éclairer,
**caractérisé en ce qu'**il comprend
- au moins trois sources lumineuses (2) et au moins trois surfaces (4) à éclairer, l'au moins un guide de lumière (3) comprenant au moins trois premiers éléments de réflexion (31) comprenant respectivement au moins trois faces de réflexion agencées selon une forme pyramidale, au moins trois deuxièmes surfaces de réflexion (32) et au moins trois troisièmes surfaces de réflexion (33), lesquelles dirigent la lumière vers les au moins trois surfaces (4) à éclairer, les au moins trois surfaces (4) à éclairer formant un polygone présentant au moins trois côtés,
- et l'au moins un guide de lumière (3) est un seul guide de lumière commun aux au moins trois sources lumineuses (2) et connecté aux au moins trois sources lumineuses (2).

2. Dispositif d'éclairage pour un feu de véhicule (1) selon la revendication 1, **caractérisé en ce que** les au moins deux zones (321) de l'au moins une deuxième surface de réflexion (32) comprennent une pluralité d'optiques à facettes (322) conçues pour réfléchir la lumière incidente de telle sorte que la lumière tombant sur l'au moins une deuxième surface de réflexion (32) est réfléchie sensiblement dans la même direction vers la troisième surface de réflexion (33).

3. Dispositif d'éclairage pour un feu de véhicule (1) selon la revendication 1, **caractérisé en ce qu'**il comprend au moins un couvercle (5) chevauchant l'au moins un guide de lumière (3), l'au moins un couvercle (5) définissant l'au moins une surface (4) à éclairer de manière à permettre à la lumière de sortir de l'au moins un guide de lumière (3).

4. Dispositif d'éclairage pour un feu de véhicule (1) selon la revendication 3, **caractérisé en ce que** le couvercle (5) est noir.

5. Dispositif d'éclairage pour un feu de véhicule (1) selon la revendication 1, **caractérisé en ce qu'**il comprend un élément de centrage (6) pour le guide de lumière (3).

6. Dispositif d'éclairage pour un feu de véhicule (1) selon la revendication 1, **caractérisé en ce que** l'au moins un faisceau lumineux émis par l'une des au moins trois sources lumineuses (2) tombe sur le premier élément de réflexion (31) orienté face à la source lumineuse (2) et sur les deuxième et troisième surfaces de réflexion (32, 33), lesquelles entourent le premier élément de réflexion (31) de telle sorte que l'une des au moins trois sources lumineuses (2) illumine l'une des au moins trois surfaces (4) à éclairer.

7. Dispositif d'éclairage pour un feu de véhicule (1) selon la revendication 1, **caractérisé en ce qu'**il comprend une électronique (7) et un dissipateur thermique (8) communs aux au moins trois sources lumineuses (2) et connectés aux au moins trois sources lumineuses (2).

8. Dispositif d'éclairage pour feu de véhicule (1) selon la revendication 1, **caractérisé en ce que** l'au moins une deuxième face de réflexion (311b) est conçue pour réfléchir la lumière incidente vers une première des au moins deux zones (321) et que l'au moins une troisième face de réflexion (311c) est conçue pour réfléchir la lumière incidente vers une deuxième des au moins deux zones (321), la première et la deuxième des au moins deux zones (321) faisant partie d'une seule deuxième surface de réflexion (32).

9. Dispositif d'éclairage pour feu de véhicule (1) selon la revendication 1, **caractérisé en ce que** la lumière réfléchie par l'au moins une deuxième face de réflexion (311b) et par l'au moins une troisième face de réflexion (311c) est orientée, après réflexion sur la deuxième surface de réflexion (32), dans la même direction, dans laquelle l'au moins une deuxième face de réflexion (311b) et l'au moins une troisième face de réflexion (311c) font partie d'un seul premier élément de réflexion (31).

10. Dispositif d'éclairage pour un feu de véhicule (1) selon la revendication 9, **caractérisé en ce que** la lumière réfléchie par l'au moins une deuxième face de réflexion (311b) et par l'au moins une troisième face de réflexion (311c) est orientée en sens inverse, l'au moins une deuxième face de réflexion (311b) et l'au moins une troisième face de réflexion (311c) faisant partie d'un seul premier élément de réflexion (31).

11. Dispositif d'éclairage pour un feu de véhicule (1) selon la revendication 1, **caractérisé en ce que** la lumière réfléchie par l'au moins une des premières faces de réflexion (311a) est orientée dans une direction sensiblement perpendiculaire à la lumière réfléchie par l'au moins une des deuxièmes ou des troisièmes faces de réflexion (311b, 311c), l'au moins une des premières faces de réflexion (311a) et l'au moins une des deuxièmes ou des troisièmes faces de réflexion (311b, 311c) faisant partie d'un seul premier élément de réflexion (31).

12. Dispositif d'éclairage pour un feu de véhicule (1) selon la revendication 1, **caractérisé en ce que** le guide de lumière (3) est en polycarbonate optique à haute transmissivité.

13. Feu de véhicule (1) comprenant un dispositif d'éclairage selon la revendication 1.
